# EUROPÄISCHE PATENTSCHRIFT

(11) **EP 2 467 343 B1**
(45) Veröffentlichungstag und Bekanntmachung des Hinweises auf die Patenterteilung: **02.04.2014**
(21) Anmeldenummer: 10739644.2
(22) Anmeldetag: 06.08.2010
(51) Int. Cl.: C03C 17/06, C03C 17/36, F24C 15/10, H05B 6/12

(54) **INDUKTIV BEHEIZTES KOCHFELD MIT EINER METALLISCH BESCHICHTETEN ABDECKPLATTE**
INDUCTIVELY HEATED HOB HAVING A METAL-COATED COVER PLATE
TABLE DE CUISSON À INDUCTION COMPORTANT UNE PLAQUE DE COUVERTURE À COUCHE MÉTALLIQUE

(30) Priorität: 17.08.2009 EP 09382146; 18.08.2009 ES 200930604; 18.08.2009 ES 200930605; 01.10.2009 EP 09382191; 05.11.2009 ES 200930958
(43) Veröffentlichungstag der Anmeldung: 27.06.2012
(73) Patentinhaber: BSH Bosch und Siemens Hausgeräte GmbH, 81739 München (DE)
(72) Erfinder: ALONSO ESTEBAN, Rafael, E-22004 Huesca (ES); BUÑUEL MAGDALENA, Miguel Angel, E-50017 Zaragoza (ES); ESTER SOLA, Francisco Javier, E-50001 Zaragoza (ES); GARCIA JIMÉNEZ, Jose Ramon, E-50009 Zaragoza (ES); PELAYO ZUECO, Francisco Javier, E-50008 Zaragoza (ES); PEREZ CABEZA, Pilar, E-50008 Zaragoza (ES); PLANAS LAYUNTA, Fernando, E-50009 Zaragoza (ES); SANCHO MARTINEZ, Diego, E-26005 Logroño (La Rioja) (ES); SUBIAS DOMINGO, Jesus Mario, E-50008 Zaragoza (ES); VILLUENDAS YUSTE, Francisco, E-50009 Zaragoza (ES)
(74) Vertreter: Lang, Michael
(86) Internationale Anmeldenummer: PCT/EP2010/061504
(87) Internationale Veröffentlichungsnummer: WO 2011/020720

(56) Entgegenhaltungen:
- DE-A1-102006 017 250
- US-A1- 2008 190 409
- US-A1- 2009 065 500

## Beschreibung

Die Erfindung geht aus von einem Kochfeld mit einer metallisch beschichteten Abdeckplatte nach dem Oberbegriff des Anspruchs 1 und von einem Verfahren zum Herstellen einer solchen Abdeckplatte nach dem Oberbegriff des Anspruchs 11.

Aus der US 2008/0264931 A1 ist ein Kochfeld mit einer Abdeckplatte bekannt, die zur Abdeckung eines oder mehrerer Heizelemente ausgelegt ist. Die Abdeckplatte basiert auf einem Grundkörper aus Glas oder Glaskeramik, der auf wenigstens einer Seite mit einer metallischen Schicht ausgestattet ist, um die ästhetischen Gestaltungsmöglichkeiten für ein solches Kochfeld zu verbessern.

Aus der DE 10 2006 017 250 A1 ist eine Kochvorrichtung mit einer Platteneinheit bekannt. An einer Unterseite der Platteneinheit kann eine Beschichtung aufgebracht werden, die eine metallartige Schicht und einen Dekorabschnitt aufweist. Die metallartige Schicht kann vollflächig in einem Flächenbereich aufgetragen werden, der einer Funktionszone entspricht, wobei auf einer Funktionszone auf einer Oberseite der Platteneinheit ein Zubereitungsgefäß für Lebensmittel aufgestellt werden kann.

Aus der US 2008/0190409 A1 ist eine Kochfeldplatte bekannt, an deren Unterseite ebenfalls eine Beschichtung aufgebracht werden kann. Es kann dabei vorgesehen sein, dass in einem Flächenbereich, auf dem an der Oberseite ein Zubereitungsgefäß aufgestellt werden kann, eine metallische Schicht aufgebracht ist, wobei dieser Flächenbereich durch eine linienförmige Farbschicht umgeben ist.

Ferner sind Induktionskochfelder mit mehreren unter einer Abdeckplatte angeordneten Induktoren bekannt, die ein hochfrequentes Wechselmagnetfeld erzeugen. Das Wechselmagnetfeld durchdringt die Abdeckplatte und erzeugt Wirbelströme in einem auf das Kochfeld aufgestellten Kochtopf bzw. im Boden desselben. Diese Wirbelströme heizen den Boden in der gewünschten Weise auf.

Metalle schirmen Magnetfelder sehr wirkungsvoll ab. Daher existiert das technische Vorurteil, dass die Verwendung von metallisch beschichteten Abdeckplatten für Induktions kochfelder unvorteilhaft ist. Selbst wenn Metallschichten mit einer Schichtdicke verwendet werden, die geringer als die Eindringtiefe des Magnetfelds ist, führen die von dem Magnetfeld in der Schicht induzierten Ströme zu einer unkontrollierten und ungewollten elektromagnetischen Strahlung, die die elektromagnetische Verträglichkeit des Geräts verschlechtern kann und die Erfüllung der einschlägigen Normen zur elektromagnetischen Verträglichkeit erschwert.

Der Erfindung liegt daher insbesondere die Aufgabe zugrunde, die elektromagnetische Verträglichkeit eines Kochfelds mit metallischer Schicht zu verbessern und ein Verfahren zum Herstellen einer Abdeckplatte für ein solches Kochfeld bereitzustellen.

Die Aufgabe wird insbesondere durch ein Kochfeld mit den Merkmalen des unabhängigen Anspruchs 1 und durch ein Verfahren nach dem unabhängigen Anspruch 11 gelöst. Vorteilhafte Ausgestaltungen und Weiterbildungen der Erfindung ergeben sich aus den abhängigen Ansprüchen.

Die Erfindung geht insbesondere aus von einem Kochfeld mit wenigstens einem Heizinduktor und einer Abdeckplatte aus Glas oder Glaskeramik, die auf wenigstens einer Seite eine Beschichtung mit einer metallischen Schicht aufweist.

Es wird vorgeschlagen, dass ein den Heizinduktor bedeckender Bedeckungsbereich der metallischen Schicht elektrisch von einem Umgebungsbereich der Schicht isoliert ist, der den Bedeckungsbereich umgibt. Dadurch kann vermieden werden, dass induzierte Ströme zwischen dem Bedeckungsbereich und dem Umgebungsbereich ausgetauscht werden. Die maximale Oszillationsamplitude von Ladungen in der metallischen Schicht wird dadurch begrenzt, was schließlich zu einer reduzierten Strahlungsintensität führt. Die elektromagnetische Verträglichkeit des Kochfelds wird dadurch verbessert und die Einhaltung der einschlägigen Normen wird auch bei einer Kombination einer metallisch beschichteten Abdeckplatte mit Heizinduktoren ermöglicht.

Eine weitere Reduktion der elektromagnetischen Emissionen kann erreicht werden, wenn der Bedeckungsbereich mehrere elektrisch voneinander isolierte Teilbereiche umfasst. Die Teilbereiche sind konzentrisch zueinander angeordnet und können in einer besonders vorteilhaften Ausgestaltung der Erfindung die Form von konzentrischen Ringen haben, die zusätzlich in Umfangsrichtung eine oder mehrere Unterbrechungen aufweisen können.

Das Kochfeld kann ein reines Induktionskochfeld oder ein Kochfeld mit verschiedenen Heizelementen sein, das beispielsweise sowohl Induktoren als auch Strahlungsheizkörper umfassen kann.

Insbesondere wenn die Dicke der metallischen Schicht nur einen Bruchteil von weniger als 50 %, besonders vorteilhaft weniger als 10 % einer magnetischen Eindringtiefe des von dem Heizinduktor erzeugten Magnetfelds in das Material der metallischen Schicht beträgt, kann trotz der metallischen Schicht eine hinreichende Kopplung des Heizinduktors an das Kochgeschirrelement erreicht werden. Die magnetische Eindringtiefe beträgt typischerweise zwischen 10 und 100 nm und beschreibt das exponentielle Abklingen des Magnetfelds in einem metallischen Körper. Die Eindringtiefe wird auch Londonsche Eindringtiefe genannt.

Eine wirkungsvolle Isolation bei gleichzeitig dekorativem Gesamteindruck kann erreicht werden, wenn der Bedeckungsbereich von einer linienförmigen Unterbrechung der Schicht begrenzt ist. Die Unterbrechung kann insbesondere kreisförmig, oval oder von der Form eines regelmäßigen Polygons sein.

Die Unterbrechung ist deutlich sichtbar und damit geeignet zur Visualisierung bzw. Begrenzung der von dem Heizelement gebildeten Heizzone, wenn eine Breite der Unterbrechung wenigstens 2 mm beträgt. Auch bei einer Breite von wenigstens 1 mm kann eine gute Sichtbarkeit der Unterbrechungslinie vor dem ansonsten metallisch wirkenden Hintergrund der Schicht gewährleistet werden.

Um die Sichtbarkeit der Unterbrechung zu verbessern, wird ferner vorgeschlagen, dass zumindest im Bereich der Unterbrechung eine dielektrische Farbschicht auf die Abdeckplatte aufgebracht ist.

Die dielektrische Farbschicht kann gleichzeitig als Schutzschicht für die metallische Schicht wirken, wenn die dielektrische Farbschicht die metallische Schicht zumindest teilweise überdeckt.

Die metallische Schicht kann insbesondere auf eine Rückseite der Abdeckplatte aufgebracht sein. Dadurch können Beschädigungen der metallischen Schicht vermieden werden.

Die Unterbrechung kann beispielsweise während des Auftrags der metallischen Schicht durch das Auflegen einer Maske hergestellt werden oder alternativ kann die metallische Schicht im Bereich der Unterbrechung abgetragen werden. Dazu kann die metallische Schicht entweder mechanisch oder mit einem Laser entfernt werden.

Ein weiterer Aspekt der Erfindung betrifft ein Verfahren zum Herstellen einer Abdeckplatte des oben beschriebenen Typs. Es wird vorgeschlagen, dass zur elektrischen Isolation eines den Heizinduktor bedeckenden Bedeckungsbereichs der metallischen Schicht gegenüber einem Umgebungsbereich der Schicht eine den Bedeckungsbereich begrenzende Unterbrechung in die metallische Schicht eingearbeitet wird.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Abdeckplatte nach einer ersten Ausgestaltung der Erfindung,
- Fig. 2: eine Schnittdarstellung des Kochfelds aus Fig. 1,
- Fig. 3: eine Abdeckplatte eines Kochfelds nach einer weiteren Ausgestaltung der Erfindung mit einem Überdeckungsbereich mit mehreren konzentrischen Teilbereichen, und
- Fig. 4: einen ovalen Überdeckungsbereich nach einer weiteren Ausgestaltung der Erfindung.

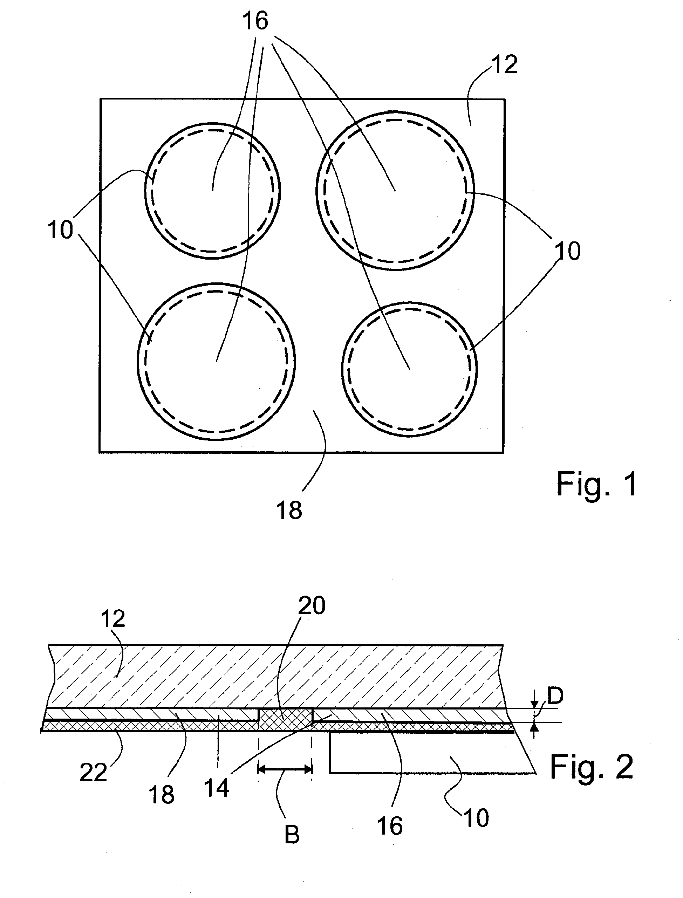

Fig. 1 zeigt ein Kochfeld mit vier Heizinduktoren 10, die unter eine Abdeckplatte 12 aus Glas oder Glaskeramik angeordnet sind. Die Heizinduktoren 10 werden mit einem hochfrequenten Heizstrom gespeist und erzeugen im Betrieb des Induktionskochfelds ein hochfrequentes Magnetfeld, das die Abdeckplatte 12 durchdringt und in den Boden eines auf das Kochfeld aufgestellten Kochgeschirrelements eindringt. Die in dem Boden des Kochgeschirrelements erzeugten Wirbelströme heizen schließlich diesen Boden und damit die in dem Kochtopf bzw. der Pfanne aufgenommenen Speisen.

Während des Betriebs überträgt sich in einen von dem Boden des Kochtopfs bedeckten Bereich der Abdeckplatte 12 Wärme durch den Kontakt mit dem Kochgeschirrelement auf die Abdeckplatte 12. Daraus ergibt sich, dass die Abdeckplatte 12 temperaturbeständig bis wenigstens 200 oder 300° C und durchlässig für das von dem Heizinduktor 10 erzeugte Magnetfeld sein muss. Ferner muss die Oberfläche der Abdeckplatte 12 robust und leicht zu reinigen sein.

Jeder der Heizinduktoren 10 ist kreisförmig und unterhalb jeweils eines ebenfalls kreisförmigen Bedeckungsbereichs 16 der Abdeckplatte 12 angeordnet, der den gleichen Durchmesser hat wie der entsprechende Heizinduktor 10. Die Bedeckungsbereiche 16 entsprechen den Bereichen, auf die idealerweise Kochtöpfe aufgestellt werden sollen, um einen effizienten Betrieb des Kochfelds zu ermöglichen. Die Größe der Kochtöpfe sollte wenigstens ungefähr der Größe der Bedeckungsbereiche 16 entsprechen. Die Bedeckungsbereiche 16 sind durch eine auf der Rückseite der Abdeckplatte 12 angebrachte Zeichnung umgrenzt, die weiter unten näher erläutert wird. Alternativ kann auch auf der Oberseite der Abdeckplatte 12 beispielsweise in einem Siebdruckverfahren eine den Bedeckungsbereich 16 umgrenzende Markierung aufgebracht werden.

Die Bedeckungsbereiche 16 sind insbesondere geometrisch kongruent zur Form der Heizinduktoren 10 und überragen deren Kontur in der Draufsicht um höchstens 1 cm. Im Wesentlichen folgt die Kontur der Bedeckungsbereiche 16 der Kontur der Heizinduktoren 10.

Fig. 2 zeigt eine Schnittdarstellung des Kochfelds nach Fig. 1 im Bereich einer solchen Grenze zwischen einem Bedeckungsbereich 16 und einem Umgebungsbereich 18, der den Bedeckungsbereich 16 umgibt.

Die Rückseite der Abdeckplatte 12 ist mit einer Beschichtung mit einer metallischen Schicht 14 ausgestattet, die beispielsweise in einem Magnetron-Sputtering-Verfahren aufgebracht sein kann. Eine Dicke D der metallischen Schicht 14 liegt zwischen ca. 5 und 40 nm und beträgt damit weniger als 50 % einer magnetischen Eindringtiefe des von dem Heizinduktor 10 erzeugten Magnetfelds in das Material der metallischen Schicht 14. Die Dicke D ist in Fig. 2 zur besseren Visualisierung stark überzeichnet und beträgt in besonders vorteilhaften Ausgestaltungen der Erfindung weniger als 10 % der Eindringtiefe.

Der Bedeckungsbereich 16 ist von einer linienförmigen Unterbrechung 20 der Schicht 14 begrenzt. Die Unterbrechung 20 grenzt den Bedeckungsbereich 16 von dem Umgebungsbereich 18 ab und bildet den in Fig. 1 dargestellten geschlossenen Ring. Die Unterbrechung 20 isoliert damit den Bedeckungsbereich 16 elektrisch von dem Umgebungsbereich 18 und verhindert, dass von dem Magnetfeld induzierte Wirbelströme zwischen dem Bedeckungsbereich 16 und dem Umgebungsbereich 18 ausgetauscht werden. Dadurch wird die elektromagnetische Verträglichkeit insgesamt verbessert.

Die Breite B der Unterbrechung 20 beträgt ca. 1-2 mm, so dass die Unterbrechung 20 durch das transparente Material der Abdeckplatte 12 hindurch von der Vorderseite der Abdeckplatte 12 als klar definierte Linie mit einer Breite von 2 mm in dem ansonsten metallisch glänzenden Hintergrund sichtbar ist.

Nach dem Aufbringen der metallischen Schicht 14 ist im Bereich der Unterbrechung 20 eine dielektrische Schutz- und/oder Farbschicht 22 auf die Abdeckplatte 12 aufgebracht. Die Schutz- und/oder Farbschicht 22 verhindert eine Korrosion oder Beschädigung der metallischen Schicht 14 und ist im Bereich der Unterbrechung 20 auch von der Vorderseite der Abdeckplatte 12 aus sichtbar. Durch die Farbwahl der dielektrischen Farbschicht 22 kann damit die Farbe der die Bedeckungsbereiche 16 umgrenzenden Markierungen gewählt werden. Um die metallische Schicht 14 möglichst gut zu schützen, kann die dielektrische Schutz- und/oder Farbschicht 22 in einer besonders vorteilhaften Ausgestaltung die gesamte Rückseite der Abdeckplatte 12 überdecken.

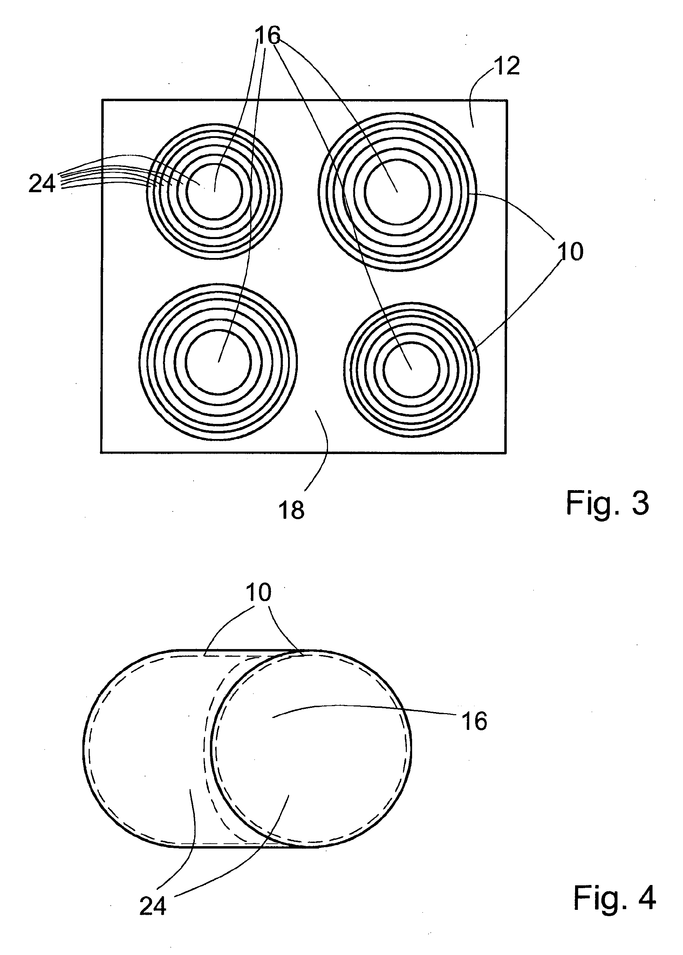

Fig. 3 zeigt ein alternatives Ausführungsbeispiel der Erfindung, in welchem der Bedeckungsbereich 16 mehrere elektrisch voneinander isolierte Teilbereiche 24 umfasst. Die Teilbereiche 24 haben die Form von konzentrischen Kreisen. Dadurch wird die elektromagnetische Verträglichkeit des Kochfelds weiter verbessert.

Bei der Herstellung der Abdeckplatte 12 kann die Unterbrechung 20 entweder durch das Aufbringen einer Maske während des Auftrags der metallischen Schicht 14 oder durch das nachträgliche Abtragen der Schicht 14 beispielsweise durch ein Laserablationsverfahren hergestellt werden. Die Isolation der Teilbereiche 24 voneinander kann beispielsweise bei der Verwendung eines Laserablationsverfahrens durch sehr dünne, linienförmige Unterbrechungen erfolgen. Diese Unterbrechungen können sehr dünn sein, beispielsweise im Bereich von einigen Mikrometern, so dass sie den Gesamteindruck des Bedeckungsbereichs 16 als geschlossene metallische Fläche nicht stören.

Fig. 4 zeigt ein weiteres Ausführungsbeispiel der Erfindung mit einem ovalen Bedeckungsbereich 16 zum Bedecken eines Paars von Induktoren, die zusammen als BräterHeizzone betrieben werden können. Der Bedeckungsbereich 16 umfasst auch hier mehrere elektrisch voneinander isolierte Teilbereiche 24, die an die Heizinduktoren 10 angepasst sind.

In weiteren Ausgestaltungen der Erfindung kann die Abdeckplatte mit mehreren metallischen Schichten ausgestattet werden, die auch semitransparent sein können.

### Bezugszeichen

- 10: Heizinduktor
- 12: Abdeckplatte
- 14: Schicht
- 16: Bedeckungsbereich
- 18: Umgebungsbereich
- 20: Unterbrechung
- 22: Farbschicht
- 24: Teilbereich
- B: Breite
- D: Dicke

## Patentansprüche

1. Kochfeld mit wenigstens einem Heizinduktor (10) und einer Abdeckplatte (12) aus Glas- oder Glaskeramik, die auf wenigstens einer Seite eine Beschichtung mit einer metallischen Schicht (14) aufweist, wobei
ein den Heizinduktor (10) bedeckender Bedeckungsbereich (16) der metallischen Schicht (14) elektrisch von einem Umgebungsbereich (18) der Schicht (14) isoliert ist, der den Bedeckungsbereich (16) umgibt, **dadurch gekennzeichnet, dass** der Bedeckungsbereich (16) mehrere elektrisch voneinander isolierte Teilbereiche (24) umfasst und die Teilbereiche (24) konzentrisch zueinander angeordnet sind.

2. Kochfeld nach Anspruch 1, **dadurch gekennzeichnet, dass** eine Dicke (D) der metallischen Schicht (14) weniger als 50% einer magnetischen Eindringtiefe des von dem Heizinduktor (10) erzeugten Magnetfelds in das Material der metallischen Schicht (14) ausmacht, und zwischen 5nm und 40nm beträgt

3. Kochfeld nach Anspruch 2, **dadurch gekennzeichnet, dass** die Dicke (D) der metallischen Schicht (14) weniger als 10 % einer magnetischen Eindringtiefe des von dem Heizinduktor (10) erzeugten Magnetfelds in das Material der metallischen Schicht (14) ausmacht.

4. Kochfeld nach einem der vorhergehenden Ansprüche, **dadurch gekennzeichnet, dass** der Bedeckungsbereich (16) von einer linienförmigen Unterbrechung (20) der Schicht (14) begrenzt ist.

5. Kochfeld nach Anspruch 4, **dadurch gekennzeichnet, dass** eine Breite (B) der Unterbrechung (20) wenigstens 2 mm beträgt.

6. Kochfeld nach einem der vorhergehenden Ansprüche, **dadurch gekennzeichnet**, das zumindest im Bereich der Unterbrechung (20) eine dielektrische Farbschicht (22) auf die Abdeckplatte (12) aufgebracht ist.

7. Kochfeld nach Anspruch 6, **dadurch gekennzeichnet, dass** die dielektrische Farbschicht (22) die metallische Schicht (14) zumindest teilweise überdeckt.

8. Kochfeld nach einem der Ansprüche 4 bis 7, **dadurch gekennzeichnet, dass** die Unterbrechung (20) durch das Aufbringen einer Maske während des Auftrags der metallischen Schicht (14) hergestellt ist.

9. Kochfeld nach einem der Ansprüche 4 bis 7, **dadurch gekennzeichnet, dass** die Unterbrechung (20) durch das Abtragen der Schicht (14) nach dem Auftragen der metallischen Schicht (14) hergestellt ist.

10. Kochfeld nach einem der vorhergehenden Ansprüche, **dadurch gekennzeichnet, dass** die Teilbereiche (24) die Form von konzentrischen Ringen haben.

11. Verfahren zum Herstellen einer Abdeckplatte (12) aus Glas- oder Glaskeramik für ein Kochfeld, wobei die Abdeckplatte (12) auf wenigstens einer Seite eine Beschichtung mit einer metallischen Schicht (14) aufweist, wobei zur elektrischen Isolation eines den Heizinduktor (10) bedeckenden Bedeckungsbereich (16) der metallischen Schicht (14) gegenüber einem Umgebungsbereich (18) der Schicht (14) eine den Bedeckungsbereich (16) begrenzende Unterbrechung (20) in die metallische Schicht (14) eingearbeitet wird,**dadurch gekennzeichnet dass**, der Bedeckungsbereich (16) mit mehreren konzentrisch zueinander angeordneten und elektrisch voneinander isolierten Teilbereichen (24) ausgebildet wird.

## Claims

1. Hob which comprises at least one heating inductor (10) and a glass or glass ceramics cover plate (12) that is coated with a metal layer (14) on at least one side thereof, wherein
a cover region (16) of the metal layer (14) covering the heating inductor (10) is electrically insulated from a surrounding region (18) of the layer (14), which surrounding region (18) surrounds the cover region (16), **characterised in that** the cover region (16) comprises a plurality of sections (24) which are electrically insulated from each other and the sections (24) are arranged concentrically to each other.

2. Hob according to claim 1, **characterised in that** a thickness (D) of the metal layer (14) makes up less than 50 % of a magnetic penetration depth of the magnetic field produced by the heating inductor (10) into the material of the metal layer (14) and is between 5nm and 40nm.

3. Hob according to claim 2, **characterised in that** the thickness (D) of the metal layer (14) is less than 10 % of a magnetic penetration depth of the magnetic field produced in the heating inductor (10) in the material of the metal layer (14).

4. Hob according to any one of the preceding claims, **characterised in that** the cover region (16) is limited by a linear interruption (20) in the layer (14).

5. Hob according to claim 4, **characterised in that** a width (B) of the interruption (20) is at least 2 mm.

6. Hob according to any one of the preceding claims, **characterised in that** a dielectric coloured layer (22) is applied to the cover plate (12) at least in the region of the interruption (20).

7. Hob according to claim 6, **characterised in that** the dielectric coloured layer (22) at least partially covers the metal layer (14).

8. Hob according to any one of claims 4 to 7, **characterised in that** the interruption (20) is produced by applying a mask during application of the metal layer (14).

9. Hob according to any one of claims 4 to 7, **characterised in that** the interruption (20) is produced by removing the layer (14) following application of the metal layer (14).

10. Hob according to any one of the preceding claims, **characterised in that** the sections (24) have the form of concentric rings.

11. Method for producing a glass or glass ceramics cover plate (12) for a hob, the cover plate (12) being coated with a metal layer (14) on at least one side thereof, wherein an interruption (20) limiting the cover region (16) is worked into the metal layer (14) to electrically insulate a cover region (16) of the metal layer (14) covering the heating inductor (10) from a surrounding region (18) of the layer (14), **characterised in that** the cover region (16) is embodied with a plurality of sections (24) which are arranged concentrically to each other and are electrically insulated from each other.

## Revendications

1. Table de cuisson comportant au moins un inducteur de chauffage (10) et une plaque de couverture (12) en verre ou en vitrocéramique présentant sur au moins un côté un revêtement comprenant une couche métallique (14),
une zone de couverture (16) recouvrant l'inducteur de chauffage (10) de la couche métallique (14) étant électriquement isolée d'une zone environnante (18) entourant la zone de couverture (16) de la couche (14), **caractérisée en ce que** la zone de couverture (16) comprend plusieurs zones partielles (24) isolées électriquement les unes des autres, et les zones partielles (24) sont agencées de façon concentrique les unes par rapport aux autres.

2. Table de cuisson selon la revendication 1, **caractérisée en ce qu'**une épaisseur (D) de la couche métallique (14) représente moins de 50 % d'une profondeur de pénétration magnétique du champ magnétique créé par l'inducteur de chauffage (10) dans le matériau de la couche métallique (14) et est comprise entre 5nm et 40nm.

3. Table de cuisson selon la revendication 2, **caractérisée en ce que** l'épaisseur (D) de la couche métallique (14) représente moins de 10 % d'une profondeur de pénétration magnétique du champ magnétique créé par l'inducteur de chauffage (10) dans le matériau de la couche métallique (14).

4. Table de cuisson selon l'une des revendications précédentes, **caractérisée en ce que** la zone de couverture (16) est délimitée par une discontinuité en forme de ligne (20) de la couche (14).

5. Table de cuisson selon la revendication 4, **caractérisée en ce qu'**une largeur (B) de la discontinuité (20) est au moins égale à 2mm.

6. Table de cuisson selon l'une des revendications précédentes, **caractérisée en ce que**, au moins dans la région de la discontinuité (20), une couche de couleur diélectrique (22) est appliquée sur la plaque de couverture (12).

7. Table de cuisson selon la revendication 6, **caractérisée en ce que** la couche de couleur diélectrique (22) recouvre au moins partiellement la couche métallique (14).

8. Table de cuisson selon l'une des revendications 4 à 7, **caractérisée en ce que** la discontinuité (20) est réalisée par le dépôt d'un masque pendant l'application de la couche métallique (14).

9. Table de cuisson selon l'une des revendications 4 à 7, **caractérisée en ce que** la discontinuité (20) est réalisée par l'enlèvement de la couche (14) après l'application de la couche métallique (14).

10. Table de cuisson selon l'une des revendications précédentes, **caractérisée en ce que** les zones partielles (24) ont la forme d'anneaux concentriques.

11. Procédé de fabrication d'une plaque de couverture (12) en verre ou en vitrocéramique pour une table de cuisson, la plaque de couverture (12) présentant sur au moins un côté un revêtement comprenant une couche métallique (14), procédé selon lequel, afin d'isoler électriquement une zone de couverture (16) recouvrant l'inducteur de chauffage (10) de la couche métallique (14) par rapport à une zone environnante (18) de la couche (14), une discontinuité (20) délimitant la zone de couverture (16) est créée dans la couche métallique (14), **caractérisé en ce que** la zone de couverture (16) est réalisée de façon à présenter plusieurs zones partielles (24) agencées de façon concentrique les unes par rapport aux autres et isolées électriquement les unes des autres.
